# EUROPEAN PATENT APPLICATION

(11) **EP 2 287 523 A1**
(43) Date of publication of application: **23.02.2011**
(21) Application number: 09766399.1
(22) Date of filing: 12.06.2009
(51) Int. Cl.: F21S 10/06, F21Y 101/02

(54) **MOUNTING STRUCTURE FOR INFORMING DEVICE**

(30) Priority: 20.06.2008 JP 2008161998
(71) Applicant: PATLITE CORPORATION, Chuo-ku Osaka-shi Osaka 542-0067 (JP)
(72) Inventor: SHIGEMATSU, Daisuke, Osaka-shi Osaka 542-0067 (JP); KUWANO, Koichi, Osaka-shi Osaka 542-0067 (JP)
(74) Representative: Witte, Weller & Partner
(86) International application number: PCT/JP2009/002673
(87) International publication number: WO 2009/153951

(57) **Abstract**

A mounting structure for mounting a bottom surface 24 of a case 2 of a revolving light 1 to a top surface 56 of a roof 3 of a vehicle. The mounting structure 57 includes cushioning members 58 interposed between the bottom surface 24 and the top surface 56, first fixing members 59 mounting the cushioning members 58 to the bottom surface 24, and second fixing members 60 mounting the cushioning members 58 to the top surface 56. Each cushioning member 58 includes first main cushioning portions 143 disposed close to the first fixing members 59 and contacting the bottom surface 24, a second main cushioning portion 148 disposed close to the second fixing member 60 and contacting the top surface 56, and a sub cushioning portion that damps vibration of the revolving light 1. The sub cushioning portion includes elastic projections 201 and 202 separated from the first main cushioning portions 143, projecting from an upper surface 132, and contacting the bottom surface 24 of the revolving light 1, and elastic projections 203 to 216 separated from the second main cushioning portion 148, projecting from a lower surface 133, and contacting the top surface 56.

## Description

### FIELD OF THE ART

The present invention relates to a mounting structure for mounting an informing device to a mounting object member.

### BACKGROUND ART

A revolving light can be cited as an example of an informing device. The revolving light may be mounted via a cushioning member to a member that is an object of mounting (hereinafter referred to as a "mounting object member") (see, for example, Patent Document 1). The cushioning member of Patent Document 1 has a plate-like shape and is interposed between the revolving light and the mounting object member.

Patent Document 1: Japanese Unexamined Patent Publication No. 2006-302536

In a case where the mounting object member is a roof of a vehicle, there is a problem that the revolving light resonates in accordance with vibration of a vehicle body. When such resonance occurs, for example, an abnormal noise is generated. Also, malfunction of the revolving light tends to occur readily.
To suppress the resonance, a characteristic frequency of the cushioning member is shifted away from a vibration frequency of the vehicle body. Increasing a rigidity of the cushioning member may be considered as one way of shifting the characteristic frequency. However, when the rigidity of the cushioning member is increased, a vibration damping property is reduced and the cushioning effect is spoiled. Consequently, for example, an impact force or continuous vibration due to unevenness of a road surface may cause damage of a member of a revolving light main body or cause fatigue of a member contained within a casing and thereby cause lowering of a protection performance of the contained member. This may thus cause failure of a main function of the revolving light.

Oppositely when the rigidity of the cushioning member is lowered to increase the cushioning effect of the cushioning member, resonance occurs more readily.
Thus, it was thus difficult to increase both the cushioning effect and the resonance suppressing effect of the cushioning member. This issue is likewise present in cases of informing devices other than a revolving light and in cases where the mounting object member is other than that of a vehicle.

### SUMMARY OF THE INVENTION

Thus, an object of the present invention is to provide a mounting structure for informing device that is high in cushioning effect and can suppress the occurrence of resonance.

### SUMMARY OF THE INVENTION

A mounting structure for informing device according to the present invention is a mounting structure for informing device that mounts a bottom surface of an informing device to a top surface of a mounting object member and includes a cushioning member interposed between the bottom surface of the informing device and the top surface of the mounting object member, a first fixing member mounting the cushioning member to the bottom surface of the informing device, and a second fixing member mounting the cushioning member to the top surface of the mounting object member, the cushioning member includes an upper surface opposing the bottom surface of the informing device, a lower surface opposing the top surface of the mounting object member, a first main cushioning portion disposed close to the first fixing member and contacting the bottom surface of the informing device, a second main cushioning portion disposed close to the second fixing member and contacting the top surface of the mounting object member, and a sub cushioning portion damping vibration of the informing device, and the sub cushioning portion includes at least one of either of a first sub cushioning portion, separated from the first main cushioning portion and the first fixing member, having at least one clastic projection projecting from the upper surface, and contacting the bottom surface of the informing device, and a second sub cushioning portion, separated from the second main cushioning portion and the second fixing member, having at least one elastic projection projecting from the lower surface, and contacting the top surface of the mounting object member.

By the present invention, a high cushioning effect is obtained because the respective elastic projections of the cushioning member deform readily upon receiving high-frequency vibration, even when the force is small. Meanwhile, when receiving a large force, each elastic projection, for example, collapses and becomes less likely to deform. Further, the elastic projections of the sub cushioning portion are separated from the first and second main cushioning portions, and thus when the first and second main cushioning portions that are close to the first and second fixing members are about to deform, the elastic projections of the sub cushioning portion deform while contacting the bottom surface of the informing device or the top surface of the mounting obj ect member. Consequently, deformation of the first and second main cushioning portions is suppressed. Thus, when the mounting object member vibrates, the vibration is dispersed among the main cushioning portions and the sub cushioning portion and resonance of the informing device is thus suppressed. By deformation resistance of the respective elastic projections in the process of deformation, impacts and high-frequency vibration can be relaxed, and vibration of the informing device can also be damped.

Also, with the present invention, the informing device may have a cylindrical case forming the bottom surface, the cushioning member may extend along a circumferential direction of the case, a plurality of the cushioning members may be mutually separated in the circumferential direction of the case, and each cushioning member may be mounted to an outer circumferential edge portion of the bottom surface of the case.
In this case, the plurality of cushioning members are unlikely to influence each other in the process of deforming and can mutually suppress each other's deformation. The resonance of the informing device is thus suppressed further when the mounting obj ect member vibrates. Also, the informing device is made difficult to tilt because each cushioning member is formed to be elongate in the circumferential direction of the case and is mounted to the outer circumferential edge portion of the bottom surface of the case. Deformation of the cushioning members due to tilting of the informing device is consequently suppressed, and the resonance of the informing device is suppressed further.

Also, with the present invention, the sub cushioning portion may include a plurality of elastic projections of different sizes. For example, when the elastic projections differ in size, the elasticprojections differ in characteristic frequency. The characteristic frequency of the cushioning member can thus be dispersed among a plurality of characteristic frequencies, and the resonance of the informing device is thus suppressed.
Also, with the present invention, an elastic projection among the plurality of elastic projections of different sizes that is relatively large may be disposed closer to a straight line joining a central position of the second fixing member and a central position of the case in plan view than an elastic projection that is relatively small. In this case, the cushioning member and the informing device are made difficult to tilt with respect to a direction of a normal to the top surface. Deformation of the cushioning member due to tilting of the cushioning member and the informing device is consequently suppressed, and the resonance of the informing device is thus suppressed further.

Also, with the present invention, the cushioning member may include the first sub cushioning portion, a pair of the first fixing members that are aligned in a mutually separated manner along the circumferential direction of the case may be disposed at the cushioning member, the first sub cushioning portion may include the plurality of elastic projections of different sizes, and the plurality of elastic projections may be disposed between the pair of first fixing members in regard to the circumferential direction of the case and disposed inward relative to a central position of either of the first fixing members in regard to a radial direction of the case. In this case, the cushioning member and the informing device are made difficult to tilt with respect to the direction of the normal to the top surface. Deformation of the cushioning member due to tilting of the cushioning member and the informing device is consequently suppressed, and the resonance of the informing device is thus suppressed further.

Also, with the present invention, the cushioning member may include the second sub cushioning portion, the second sub cushioning portion may include the plurality of elastic projections of different sizes, and the plurality of elastic projections may be disposed adj acent to the second fixing member and inward relative to the second fixing member in regard to the radial direction of the case. In this case, the cushioning member and the informing device are made difficult to tilt with respect to the direction of the normal to the top surface. Deformation of the cushioning member due to tilting of the cushioning member and the informing device is consequently suppressed, and the resonance of the informing device is thus suppressed further.

Also, with the present invention, the elastic projection of the sub cushioning portion may include an elastic projection with a tapered shape. In this case, the elastic projection of the sub cushioning portion deforms more readily nearer a tip of the elastic projection. The elastic projection of the sub cushioning member can deform even when a small impact force acts. Consequently, the cushioning effect can be obtained reliably. Meanwhile, as the deformation amount of the elastic projection increases, the deformation resistance of the elastic projection increases rapidly. Large deformation of the cushioning member is consequently suppressed, and resonance of the informing device is suppressed reliably.

Also, with the present invention, the case may have a recessed portion disposed at the outer circumferential edge portion of the bottom surface of the case, a portion of the cushioning member may be disposed inside the recessed portion, the cushioning member may include a side surface opposing a side wall of the recessed portion and a projecting portion projecting from the side surface, and the projecting portion may contact the side wall of the recessed portion. In this case, a portion of the cushioning member is disposed inside the recessed portion of the case, and the informing device can thus be made low in height from the top surface of the mounting object member. A position of a center of gravity of the informing device can thereby be made low, and the resonance of the informing device can thus be suppressed further. Also, failure of contained members, etc., can be suppressed because an amplitude in accordance with the pendulum principle can be suppressed. Further, when the cushioning member deforms, friction arises between the projecting portion of the cushioning member and the side wall of the recessed portion of the case, and relative movement of the cushioning member and the case is suppressed. Resonance of the informing device can thus be suppressed further.

With the present invention, the informing device may include a revolving light. In this case, failure of the revolving light can be made difficult to occur.
The above and further merits, characteristics, and effects of the present invention shall be made clear by the following description of the preferred embodiments made with reference to the attached drawings.

### BRIEF DESCRIPTION OF THE DRAWINGS

FIG. 1 is a sectional view of a revolving light to which a mounting structure according to a first preferred embodiment of the present invention is applied.
FIG. 2 is a right side view of the revolving light of FIG. 1 and a globe is indicated by alternate long and short dashed lines.
FIG. 3 is a bottom view of the revolving light of FIG. 1.
FIG. 4 is a sectional view taken along line IV-IV in FIG. 3 and mainly shows a lower portion of a case and a cushioning member.
FIG. 5 is a sectional view taken along line V-V in FIG. 3 and mainly shows a lower portion of the case and a cushioning member.
FIG. 6 is a top view of the cushioning member shown in FIG. 3.
FIG. 7 is a front view of the cushioning member shown in FIG. 6.
FIG. 8 is a bottom view of the cushioning member shown in FIG. 6.
FIG. 9 is a right side view of the cushioning member shown in FIG. 6.
FIG. 10 is a rear view of the cushioning member shown in FIG. 6.
FIG. 11 is a top view of a cushioning member of amounting structure according to a second preferred embodiment of the present invention.
FIG. 12 is a front view of the cushioning member shown in FIG. 11.
FIG. 13 is a bottom view of the cushioning member shown in FIG. 11.
FIG. 14 is a rear view of the cushioning member shown in FIG. 11.
FIG. 15 is a left side view of the cushioning member shown in FIG. 11.
FIG. 16 is a sectional view taken along line S1-S1 in FIG. 11 and FIG. 14.
FIG. 17 is a sectional view taken along line S2-S2 in FIG. 11 and FIG. 14.

### DETAILED DESCRIPTION OF PREFERRED EMBODIMENTS

Preferred embodiments of the present invention shall now be described in detail with reference to the attached drawings. With each of the preferred embodiments, a description shall be provided in accordance with a case where a revolving light is an example of an informing device and this is mounted to a roof of a vehicle as an example of a mounting object member.
The present invention is not restricted to the above and, for example, as the mounting object member, a mechanical apparatus other than a vehicle, for example, a machine tool may be used. Also, as the informing device, a speaker may be used besides a revolving light.

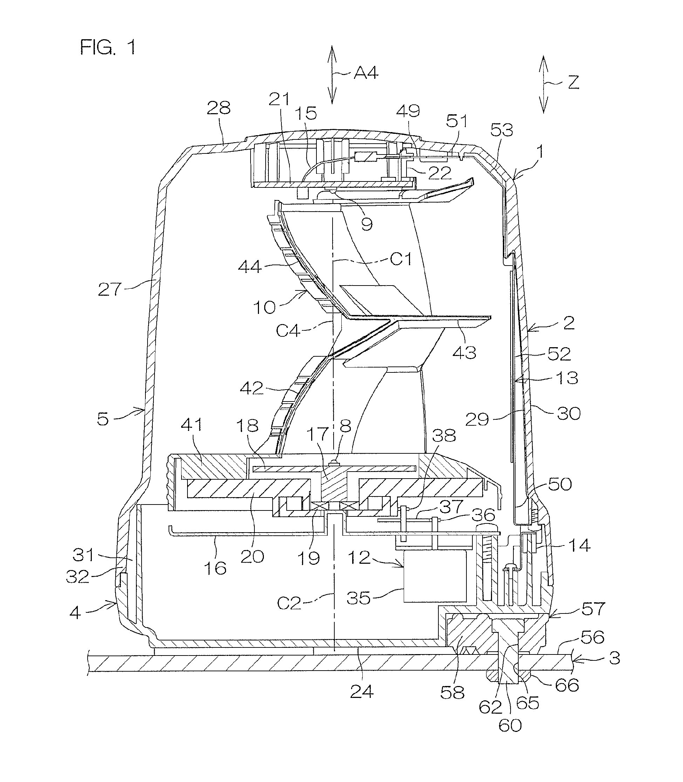

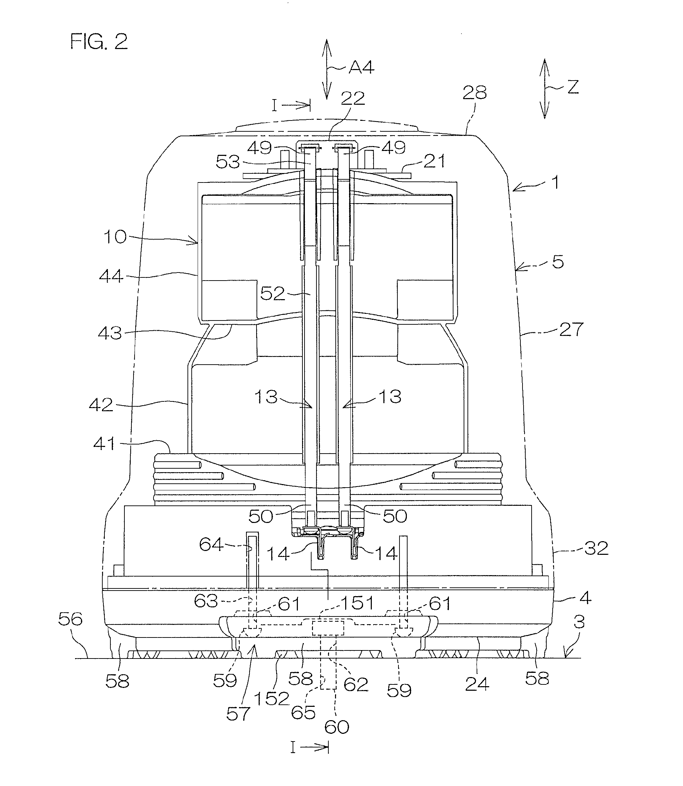

FIG. 1 is a sectional view of a revolving light to which a mounting structure of a first preferred embodiment of the present invention is applied. FIG. 2 is a right side view of the revolving light of FIG. 1 anda globe is indicated by alternate long and short dashed lines. FIG. 1 is a sectional view taken along line I-I in FIG. 2. Referring to FIG. 1, the revolving light 1 has a case 2 that forms an outer frame of the revolving light 1. The case 2 has a base 4, having a form of a cylinder with a bottom and disposed near a mounting object member (a roof 3 of a vehicle) , and a globe 5, having a form of a cylinder with a bottom and having a light transmitting property.

The revolving light 1 has the following parts 8 to 22 as internal parts. The revolving light 1 has light emitting diodes 8 and 9 (also referred to as "LEDs 8 and 9") that are light sources, a reflecting mirror 10 reflecting light emitted from the LEDs 8 and 9 toward predetermined irradiation directions, a rotation driving mechanism 12 rotatingly driving the reflecting mirror 10 about a central rotation axis C1, electrical parts (for example, a conducting member 13, terminal fittings 14, and a lead wire 15) for supplying electricity to the LEDs 8 and 9, and a plurality of supporting members 16 to 22 supporting the internal parts 8 to 10 and 12 to 15.

When the LEDs 8 and 9 emit light, the light is reflected by the reflecting mirror 10 and irradiated toward the predetermined irradiation directions. The light is irradiated toward a horizontal direction, obliquely upward, and obliquely downward. By the reflecting mirror 10 rotating about the central rotation axis C1 in this process, the irradiation directions of the light reflected by the reflecting mirror 10 rotate. Consequently, the light is irradiated toward an entire circumference.
The case 2 has a hollow, cylindrical form. The case 2 has a bottom surface 24 formed by the base 4. The internal parts 8 to 10 and 12 to 22 are housed in an interior of the case 2.

With the present preferred embodiment, the revolving light 1 shall be described in accordance with a case where a central rotation axis C2 of the case 2 of the revolving light 1 lies along an up/down vertical direction Z.
The globe 5, which is a component part of the case 2, has a cylinder portion 27 and a top portion 28. The cylinder portion 27 has an inner circumference 29 and an outer circumference 30. The top portion 28 is fixed to one end in a central axis direction of the cylinder portion 27. Also, an opening 31 is formed at the other end in the central axis direction of the cylinder portion 27. Specifically, the cylinder portion 27 and the top portion 28 are made integrally from a single material. Also, an entirety of the globe 5 is formed of a light transmitting material, for example, a polycarbonate resin, which is a synthetic resin material.

The globe 5 is disposed further from the mounting object member 3 than the base 4. An end portion 32 at the opening 31 side of the globe 5 is mounted to the base 4. The globe 5 is supported by the base 4. The case 2 is arranged by the base 4 and the globe 5 being joined to each other. A central axis of the base 4, a central axis C4 of the globe 5, and the central axis C2 of the case 2 are mutually coincident. The central axis C2 of the case 2 may be parallel to and not coincident with the central rotation axis C1.

A shape of a horizontal cross section (a cross section orthogonal to the central axis C4) of the globe 5 is a substantially circular shape that approximates a circle. Specifically, a portion of a circle of a circumferential. direction of the cylinder portion 27 bulges in an outward radial direction.
A shape of a horizontal cross section of the base 4 is a substantially circular shape. Specifically, portions (a plurality of locations) of a circle of the circumferential direction are recessed in inward radial directions.

The shape of the horizontal cross section of the cylinder portion 27 is not restricted to the substantially circular shape and may be a true circular shape or a polygonal shape, such as a rectangular shape, etc. , or may be a substantially polygonal shape that approximates a polygonal shape. A direction having the central axis as an origin and being orthogonal to the central axis of the cylindrical shape is referred to as a radial direction.
The LED 8 is supported by the base 4 via the supporting members 16, 17, and 18 and is housed inside the globe 5. The LED 8 is disposed at an end portion at a lower side of the reflecting mirror 10 along the central rotation axis C1.

The LED 9 is mounted to the top portion 28 of the globe 5 via the supporting member 21 and is housed inside the globe 5. The LED 9 is disposed at an end portion at an upper side of the reflecting mirror 10 along the central rotation axis C1.
The reflecting mirror 10 is rotatably supported by the base 4 and is housed inside the globe 5. The reflecting mirror 10 is driven to rotate about the central rotation axis C1 and reflects the light from the LEDs 8 and 9 toward surroundings.

The supporting member 16 is fixed to the base 4 and supports the LED 8 in a fixed state via the supporting members 17 and 18. The supporting member 18 is, for example, a circuit board. The supportingmember 16 rotatably supports the reflecting mirror 10 via the supporting member 19 and the supporting member 20. The supporting member 19 is arranged from a cylindrical bearing.
The supporting member 21 is fixed to the top portion 28 of the globe 5 of the case 23 and supports the LED 9. The supporting member 21 is, for example, arranged from a circuit board. A conductor portion of the circuit board is electrically connected to the LED 9. The supporting member 22 is mounted to the supporting member 21. The conducting member 13 is mounted to the supporting member 22.

The rotation driving mechanism 12 includes an electric motor 35 as a drive source, and a plurality of power transmission members 36, 37, and 38 for transmitting a rotation of an output shaft of the electric motor 35 to the reflecting mirror 10. The plurality of power transmission members 36, 37, and 38 and the supporting member 20 make up a transmission mechanism that transmits the rotation. The supporting member 20 is driven and rotated by the electric motor 35.
The plurality of power transmission members 36, 37, and 38 are formed of disk-like elastic members that mutually differ in diameter and are rotatably supported. Rotation is transmitted by mutual frictional engagement of outer circumferences of the power transmission members 36 and 37. The power transmission members 37 and 38 rotate mutually integrally. An outer circumference of the power transmission member 38 is frictionally engaged with an outer circumference of the supporting member 20 to transmit rotation.

The reflecting mirror 10 includes an annular plate 41 joined to the supporting member 20, a curved plate 42 extending upward from an upper surface of the annular plate 41 and facing the LED 8 from above, a flat plate 43 extending forward from an upper end edge of the curved plate 42, and a curved plate 44 extending upward from the upper end edge of the curved plate 42 and facing the LED 9 from below. The respective plates 41 to 44 are formed integrally of a single material. The curved plate 42 has a concavely curved surface shape and forms a reflecting surface that reflects the light from the LED 8 in a substantially horizontal direction. The curved plate 44 has a concavely curved surface shape and forms a reflecting surface that reflects the light from the LED 9 in a substantially horizontal direction.

The electrical parts include parts (not shown) for supplying electrical power to the LED 8 and the parts (for example, the conducting member 13, the terminal fittings 14, the lead wire 15, etc.) for supplying electrical power to the LED 9.
For example, the LED 9 is electrically connected via the circuit board (corresponding to the supporting member 21) , the lead wire 15, the conducting member 13, the terminal fittings 14, and a lead wire (not shown) to an external power supply apparatus, for example, a car battery (not shown). Electrical power is thereby supplied to the LED 9.

Referring to FIG. 1 and FIG. 2, a pair, in other words, two of the conducting members 13 are provided. The pair of conducting members 13 are arranged in the same manner as each other. Each conducting member 13 is an elongate plate member made of a metal.
Each conducting member 13 has one end portion 49 and another end portion 50 in relation to a longitudinal direction of the conducting member 13.

A portion between the one end portion 49 and the other end portion 50 of the conducting member 13 includes a first portion 51 opposing the top portion 28 of the globe 5, a second portion 52 opposing the inner circumference 29 of the globe 5, and a bent third portion 53 connecting the first and second portions 51 and 52 to each other. The one end portion 49, the first portion 51, the third portion 53, the second portion 52, and the other end portion 50 are formed integrally of a single material, such as copper, brass, stainless steel, etc.

The one end portion 49 of the conducting member 13 is mounted to the top portion 28 of the globe 5 via the supporting members 21 and 22.
The first portion 51 of the conducting member 13 is connected to the one end portion 49, is disposed close to the top portion 28 of the globe 5, and extends in a radial direction of the globe 5.
The third portion 53 of the conducting member 13 connects the first and second portions 51 and 52 to each other and extends obliquely with respect to an axial direction A4 of the globe 5.

The second portion 52 of the conducting member 13 is disposed close to the inner circumference 29 of the globe 5 and extends substantially parallel to the axial direction A4 of the globe 5. That is, the second portion 52 is disposed parallel to the axial direction A4 of the globe 5 or extends incliningly at a small angle with respect to the axial direction A4.
The other end portion 50 of the conducting member 13 is mounted to the globe 5. Specifically, the other end portion 50 is fixed by screwing to an end portion 32 at an opening 31 side of the globe 5.

A case where the other end portion 50 of the conducting member 13 is mounted to the base 4 may also be considered. With the present preferred embodiment, a description shall be provided in accordance with the case where the other end portion 50 of the conducting member 13 is mounted to the globe 5.
A pair of the terminal fittings 14 are mounted to the base 4. The pair of terminal fittings 14 are arranged to be the same as each other. One terminal fitting 14 and one conducting member 13 are mutually paired and are electrically connected to each other. The other terminal fitting 14 and the other conducting member 13 are mutually paired and are electrically connected to each other.

The bottom surface 24 of the case 2 of the revolving light 1 is mounted by a mounting structure 57 to the top surface 56 of the roof 3 of the vehicle.
The mounting structure 57 includes the bottom surface 24 of the case 2, the top surface 56 of the roof 3, a plurality of cushioning (insulator) members 58 interposed between the bottom surface 24 and the top surface 56, a plurality of first fixing members 59 mounting the plurality of cushioning members 58 to the bottom surface 24 of the case 2, and a plurality of second fixing members 60 mounting the plurality of cushioning members 58 to the top surface 56 of the roof 3. The first and second fixing members 59 and 60 are respectively arranged from bolts.

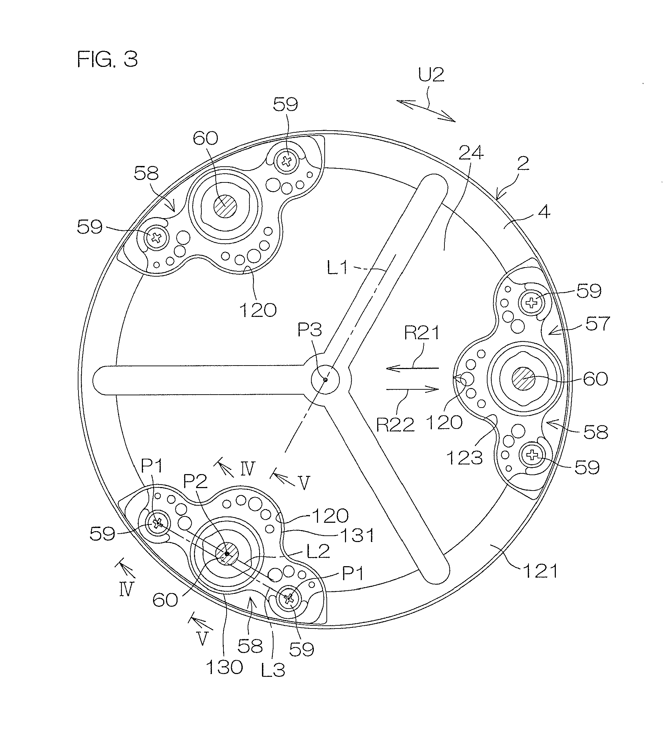

In the present preferred embodiment, the mounting structure 57 has three cushioning members 58 (see also FIG. 3). As shown in FIG. 2, each cushioning member 58 is fixed to the revolving light 1 by two first fixing members 59. Also, each cushioning member 58 is fixed to the roof 3 by a single second fixing member 60.
Specifically, each cushioning member 58 includes two first insertion holes 61 and a single second insertion hole 62. Each first fixing member 59 is inserted through a first insertion hole 61 of the cushioning member 58, an insertion hole 63 of the base 4, and screwingly engaged in a screw hole 64 of the globe 5. The first fixing member 59 thereby fastens the globe 5, the base 4, and the cushioning member 58 in a co-fastening state. Also, the roof 3 is formed of a metal plate, for example, a steel plate. A plurality, for example, three of insertion holes 65 are formed at predetermined positions in the roof 3. Each second fixing member 60 is inserted through an insertion hole 65 of the roof 3. A nut 66 is screwingly engaged with each second fixing member 60.

When the revolving light 1 is mounted to the roof 3 of the vehicle, the revolving light 1 may resonate in accordance with vibration of the vehicle. There is concern for failure of the revolving light 1 occurring due to the resonance.
Thus, with the present preferred embodiment, the cushioning members 58 are provided to suppress the resonance of the revolving light 1 when the vehicle vibrates. Each cushioning member 58 includes first and second sub cushioning portions 151 and 152 to be described below.

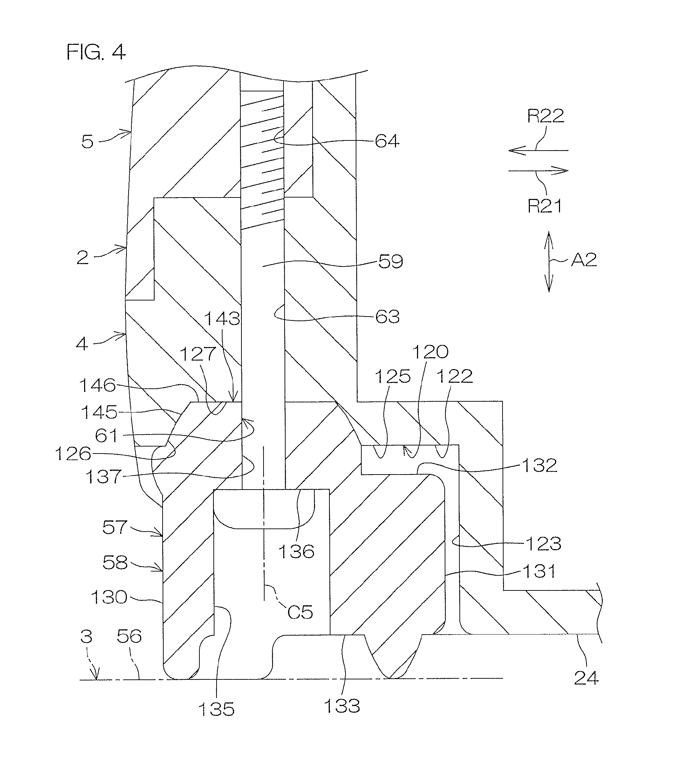

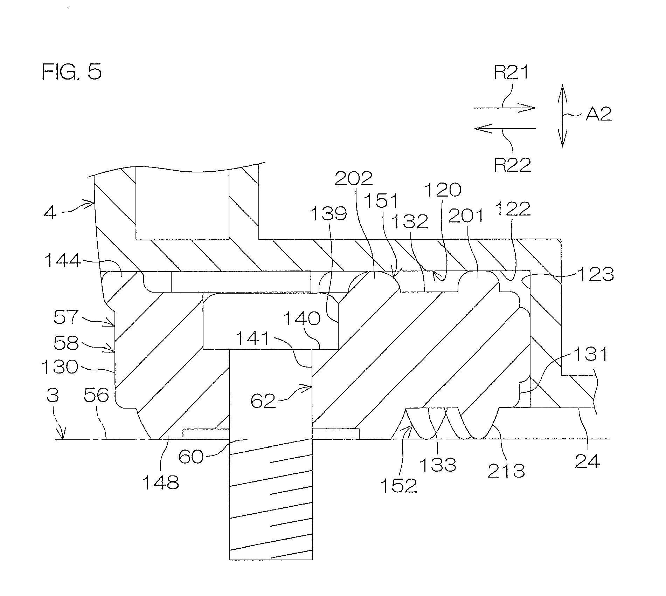

FIG. 3 is a bottom view of the revolving light 1. FIG. 4 is a sectional view taken along line IV-IV in FIG. 3 and mainly shows a lower portion of the case 2 and a cushioning member 58. FIG. 5 is a sectional view taken along line V-V in FIG. 3 and mainly shows a lower portion of the case 2 and a cushioning member 58.
With reference to FIG. 3 and FIG. 4, the bottom surface 24 of the case 2 has a plurality, for example, three of recessed portions 120. The plurality of recessed portions 120 of the same number as the number of cushioning members 58 are provided. The plurality of recessed portions 120 are formed to be of mutually the same shape. The plurality of recessed portions 120 are disposed along an outer circumferential edge portion 121 of the bottom surface 24 of the case 2 and are disposed mutually and uniformly separated (that is, separated by 120 degrees) in a circumferential direction U2 of the case 2.

Each recessed portion 120 opens downward along an axial direction A2 of the case 2 and in an outward radial direction R22 of the case 2. Each recessed portion 120 has a substantially T-like shape in plan view. A central portion of the recessed portion 120 in regard to a circumferential direction U2 of the case 2 is indented in an inward radial direction R21 of the case 2. A portion of a cushioning member 58 is fitted inside each recessed portion 120.
Each recessed portion 120 has a bottom surface 122 and a side wall 123. The bottom surface 122 of the recessed portion 120 and the cushioning member 58 contact each other as shown in FIG. 4. The bottom surface 122 of the recessed portion 120 includes a flat main portion 125, an annular first indented portion 126 that is indented further in an inclining manner from the main portion 125, and a flat, annular second indented portion 127 disposed at an inner side of the first indented portion 126.

The first indented portion 126 is inclined with respect to an axis C5 parallel to the axial direction A2 of the case 2 and forms a portion of a conical surface centered about the axis C5.
The second indented portion 127 is orthogonal to the axis C5. The insertion hole 63 is formed in the second indented portion 127 as a hole for fixing the cushioning member 58 by means of the first fixing member 59. The screw hole 64 is formed further inward from the insertion hole 63. The insertion hole 63 penetrates through the base 4. The screw hole 64 is formed in the globe 5. The first indented portion 126, the second indented portion 127, the insertion hole 63, and the screw hole 64 are disposed mutually concentrically.

The plurality, for example, three of the cushioning members 58 are mutually separated in the circumferential direction U2 of the case 2. Each cushioning member 58 is mounted to a recessed portion 120 formed in the outer circumferential edge portion 121 of the bottom surface 24 of the case 2. The plurality of cushioning members 58 are arranged in the same manner as each other. Each cushioning member 58 includes a rubber member as an example of an elastic member.
Each cushioning member 58 extends elongatedly along the circumferential direction U2 of the case 2. The cushioning member 58 includes a side surface 130 in the outward radial direction R22 of the case 2 and a side surface 131 in the inward radial direction R21. A planar shape of the cushioning member 58 is a shape approximating the planar shape of the recessed portion 120, for example, a substantially T-like shape.

In each cushioning member 58 are disposed a pair of the first fixing members 59 that are aligned in a mutually separated manner in the circumferential direction U2 of the case 2. In regard to the circumferential direction U2 of the case 2, the second fixing member 60 is disposed at a mutual central position between the pair of first fixing members 59. In regard to the radial directions R21 and R22 of the case 2, the pair of first fixing members 59 are disposed at mutually the same position. In regard to the radial directions R21 and R22 of the case 2, the position of the first fixing member 59 and the position of the second fixing member 60 may differ mutually or may be the same mutually.

With the entirety of the plurality of cushioning members 58, a plurality of the first fixing members 59 and a plurality of the second fixing members 60 are used. The plurality of second fixing members 60 are mutually separated by equal angles in the circumferential direction U2 of the case 2. The plurality of first fixing members 59 are mutually separated in the circumferential direction U2 of the case 2.
Specifically, the two first fixing members 59 and the single second fixing member 60 provided according to each cushioning member 58 form a set. There are three such sets as a whole. In each set, the pair of first fixing members 59 are disposed at equal distances to both sides from the second fixing member 60 in regard to the circumferential direction U2 of the case 2.

Referring to FIG. 4 and FIG. 5, the cushioning member 58 includes an upper surface 132 that opposes the bottom surface 24 of the case 2 (the main portion 125 of the bottom surface 122 of the recessed portion 120 in the present preferred embodiment) across a gap, and a lower surface 133 that opposes the top surface 56 of the roof 3 across a gap. The upper surface 132 and the lower surface 133 respectively form planes orthogonal to the axial direction A2 of the case 2.

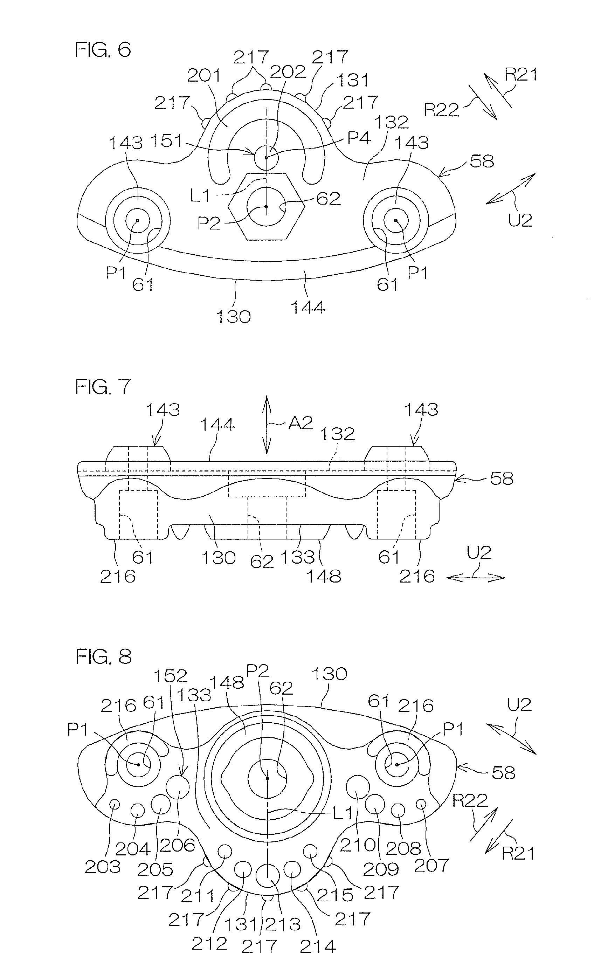

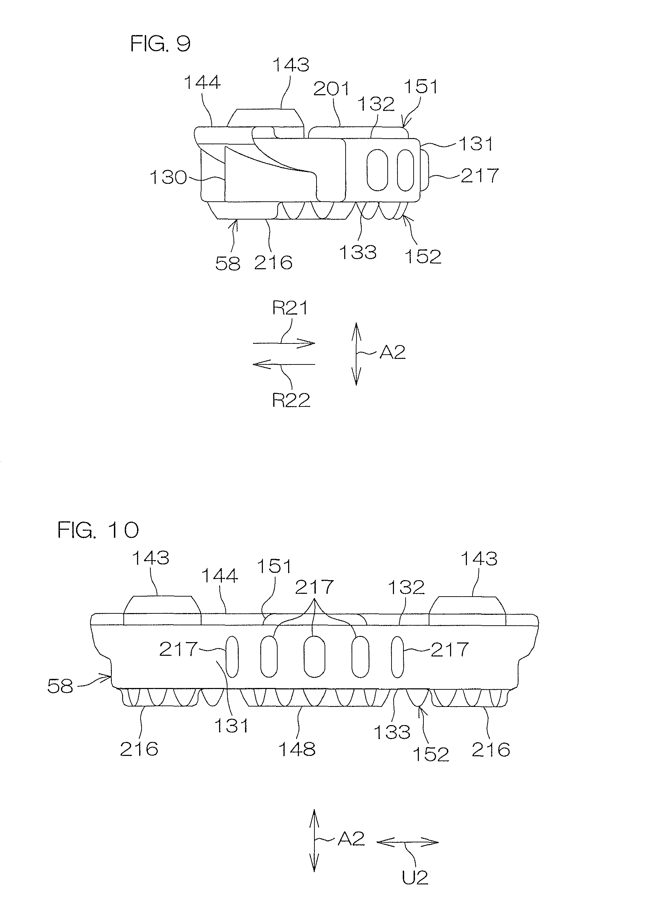

FIG. 6 is a top view of the cushioning member 58 shown in FIG. 3, FIG. 7 is a front view of the cushioning member 58 shown in FIG. 6, and FIG. 8 is a bottom view of the cushioning member 58 shown in FIG. 6. FIG. 9 is a right side view of the cushioning member 58 shown in FIG. 6, and FIG. 10 is a rear view of the cushioning member 58 shown in FIG. 6.

Referring to FIG. 6 to FIG. 10, the cushioning member 58 includes the pair of the first insertion hole 61 through which the pair of first fixing members 59 are passed, and the single second insertion hole 62 through which the second fixing member 60 is passed. The pair of first insertion holes 61 and the single second insertion hole 62 are disposed independently of each other. Each first insertion hole 61 penetrates through the upper surface 132 and the lower surface 133. The second insertion hole 62 penetrates through the upper surface 132 and the lower surface 133.

Referring to FIG. 4 and FIG. 6 to FIG. 8, each first insertion hole 61 includes a large diameter portion 135 facing the lower surface 133, an end wall 136 serving as a seating surface, and a small diameter portion 137. A lower end of the small diameter portion 137 and an upper end of the large diameter portion 135 are mutually connected via the end wall 136. A head portion of the first fixing member 59 is housed in the large diameter portion 135.
Referring to FIG. 5 and FIG. 6 to FIG. 8, the second insertion hole 62 includes a large diameter portion 139 facing the upper surface 132, an end wall 140 serving as a seating surface, and a small diameter portion 141. An upper end of the small diameter portion 141 and a lower end of the large diameter portion 139 are mutually connected via the end wall 140. A head portion of the second fixing member 60 is housed in the large diameter portion 139. The large diameter portion 139 has a polygonal shape (for example, a hexagonal shape) in plan view and is arranged to stop rotation of a polygonal (for example, hexagonal) head portion of the second fixing member 60.

Referring to FIG. 4 and FIG. 6 to FIG. 8, each cushioning member 58 includes two first main cushioning portions 143 disposed close to the first fixing members 59 and contacting the main portion 125 of the bottom surface 24 of the case 2. The two first main cushioning portions 143 are mutually connected by a projecting rib 144 that is an elastic projection. The projecting rib 144 extends along the side surface 130 and projects from the upper surface 132.

Each first main cushioning portion 143 is made up of an elastic projection that projects from the upper surface 132. The two first main cushioning portions 143 are made the same in projection height and project higher than the projecting rib 144. The number of the first main cushioning portions 143 is the same as the number of the first fixing members 59 for mounting the corresponding cushioning member 58 and is, for example, two.
Each first main cushioning portion 143 is formed to an annular form in plan view and surrounds the first fixing member 59. The first insertion hole 61 penetrates through each first main cushioning portion 61. Each first main cushioning portion 143 includes a tapered inclining surface 145 inclined with respect to the axis C5, and an end surface 146.

The inclining surface 145 of each first main cushioning portion 143 and the corresponding first indented portion 126 of the bottom surface 122 of the recessed portion 120 are in mutual contact. Also, the end surface 146 of each first main cushioning portion 143 and the corresponding second indented portion 127 of the bottom surface 122 of the recessed portion 120 are inmutual contact. Also, in this state, the other elastic projections on the upper surface 132, that is, the projecting rib 144 and elastic projections 201 and 202 of the first sub cushioning portion 151 to be described below contact the main portion 125 of the bottom surface 122 of the recessed portion 120 while being elastically and compressingly deformed.

Referring to FIG. 5 and FIG. 6 to FIG. 8, each cushioning member 58 includes a single second main cushioning portion 148 disposed close to the second fixing member 60 and contacting the top surface 56 of the roof 3.
The second main cushioning portion 148 is made up of an elastic projection that projects from the lower surface 133. The number of the second main cushioning portion 148 is the same as the number of the second fixing member 60 for mounting the corresponding cushioning member 58 to the top surface 56 of the roof 3 and is, for example, one. The second main cushioning portion 148 is formed to an annular form in plan view and surrounds the second fixing member 60 across a gap. In the state where the second main cushioning portion 148 contacts the top surface 56 of the roof 3, other elastic projections 203 to 216 that are to be described below and are disposed on the lower surface 133 contact the top surface 56.

Referring to FIG. 4, FIG. 5, and FIG. 6 to FIG. 8, each cushioning member 58 includes the first and second sub cushioning portions 151 and 152 that damp vibration of the revolving light 1.
The first sub cushioning portion 151 is separated from the first main cushioning portions 143 and the first fixing members 59 and contacts the main portion 126 of the bottom surface 24 of the case 2. The first sub cushioning portion 151 includes a plurality of elastic projections 201 and 202 projecting from the upper surface 132.

The elastic projection 201 is a projecting rib that is arcuate in plan view. The elastic projection 202 has a circular shape in plan view and is surrounded by the elastic projection 201. A diameter of the elastic projection 202 is, for example, the same in value as a width dimension of the projecting rib of the elastic projection 201. The elastic projection 202 is smaller than the elastic projection 201. The elastic projections 201 and 202 are disposed between the pair of first fixing members 59 (or first insertion holes 61) in regard to the circumferential direction U2 of the case 2. Also, the elastic projections 201 and 202 are disposed inward relative to a central position P1 of each first fixing member 59 (or first insertion hole 61) in regard to the radial directions R21 and R22 of the case 2.

In plan view, the elastic projections 201 and 202 are disposed mutually concentrically. In plan view, a center P4 of the elastic projections 201 and 202 is positioned on a straight line L1 passing through a central position P2 of the second fixing member 60 (or second insertion hole 62) and a central position P3 of the case 2 (see FIG. 3) and is positioned further in the inward radial direction R21 of the case 2 than the central position P2 of the second fixing member 60.
The elastic projections 201 and 202 are formed to be mutually of the same height in the direction of projection (amount of projection from the upper surface 132) in a free state (state of not being mounted to case 2). The elastic projections 201 and 202 are formed to be of the same height as the projecting rib 144.

Each of the elastic projections 201 and 202 has a tapered shape. The elastic projection 201 is formed to a parabolic shape in a section including a direction of projection (corresponding to a direction parallel to the axial direction A2 of the case 2) and cutting a direction of extension of the projecting rib. The elastic projection 202 is formed to have a paraboloid of revolution shape. An axis of symmetry (line passing through a focus and an apex) of the parabolic shape or the paraboloid of revolution shape extends along the direction of projection of the corresponding elastic projection.

In a case where an elastic projection is formed to a parabolic shape or a paraboloid of revolution shape, a radius of curvature of a tip of the elastic projection and a width of a base portion of the elastic projection can be set freely and readily in comparison to a case where the elastic projection is formed to a partial spherical shape. A magnitude of deformation resistance when the elastic projection deforms and a characteristic frequency of the elastic projection can thus be adjusted readily.
The second sub cushioning portion 152 is separated from the second main cushioning portion 148 and the second fixing member 60 and contacts the top surface 56 of the roof 3. The second sub cushioning portion 152 includes the plurality of elastic projections 203 to 216 projecting from the lower surface 133.

The elastic projections 203 to 216 are formed to be mutually of the same height in the direction of projection (amount of projection from the lower surface 133) in a free state (state of not being mounted to roof 3) and are formed to be of the same height as the second main cushioning portion 148. Also, each of the elastic projections 203 to 215 has a circular shape in plan view. Also, each elastic projection 216 is made up of a projecting rib having an arcuate shape in plan view.

A sectional shape (shape in a section cutting the direction of projection) of each of the elastic projections 203 to 206 is a tapered shape, for example, a parabolic shape.
The plurality of elastic projections 203 to 206 form a first set. The first set of elastic projections 203 to 206 are disposed close to one of the first fixing members 59 (or first insertion holes 61) and are disposed in the inward radial direction R21 of the case 2 relative to the one first fixing member 59 (or first insertion hole 61).

Also, in plan view, the plurality of elastic projections 203 to 206 are preferably disposed on concentric circles centered about the central position P1 of the first fixing member 59 (or first insertion hole 61) that is closer to the plurality of elastic projections 203 to 206.
The plurality of elastic projections 203, 204, 205, and 206 are formed to mutually different sizes and are formed to increase in size in plan view in that order. Of the elastic projections 203 to 206, an elastic projection that is relatively large is disposed closer to the straight line L1 in plan view than an elastic projection that is relatively small.

The plurality of elastic projections 207 to 210 form a second set. The second set of plurality of elastic projections 207 to 210 are disposed close to the other first fixing member 59 (or first insertion hole 61) and are disposed in the inward radial direction R21 of the case 2 relative to the other first fixing member 59 (or first insertion hole 61). The plurality of elastic projections 207, 208, 209, and 210 are formed to mutually different sizes and are formed to increase in size in plan view in that order. Of the elastic projections 207 to 210, an elastic projection that is relatively large is disposed closer to the straight line L1 in plan view than an elastic projection that is relatively small.

Also, in plan view, the plurality of elastic projections 207 to 210 are preferably disposed on concentric circles centered about the central position P1 of the first fixing member 59 (or first insertion hole 61) that is closer to the plurality of elastic projections 207 to 210.
The first set of plurality of elastic projections 203 to 206 and the second set of plurality of elastic projections 207 to 210 are formed to be in a line symmetrical relationship with the straight line L1 as an axis of symmetry in plan view.

The plurality of elastic projections 211 to 215 form a third set. The third set of elastic projections 211 to 215 are disposed close to the second fixing member 60 (or second insertion hole 62) and are disposed in the inward radial direction R21 of the case 2 relative to the second fixing member 60 (or second insertion hole 62).
Also, in plan view, the plurality of elastic projections 211 to 215 are preferably disposed on concentric circles centered about the central position P2 of the second fixing member 60 (or second insertion hole 62) close to the plurality of elastic projections 211 to 215.

The plurality of elastic projections 211 to 215 include elastic projections that differ in size. That is, the elastic projections 211 and 215 are smaller than the elastic projections 212 and 214. The elastic projections 212 and 214 are smaller than the elastic projection 213. Of the elastic projections 211 to 215, an elastic projection that is relatively large is disposed closer to the straight line L1 in plan view than an elastic projection that is relatively small. The third set of plurality of elastic projections 211 to 215 are formed to be in a line symmetrical relationship with the straight line L1 as an axis of symmetry in plan view.

Two of the elastic projections 216 are provided. Each elastic projection 216 has an arcuate shape extending along an edge portion of a first insertion hole 61, is disposed close to a first fixing member 59, and is disposed in the outward radial direction R22 relative to the first fixing member 59.
Referring to FIG. 6 to FIG. 10, the cushioning member 58 has a plurality of elastic projections 217 projecting from the side surface 131. The plurality of elastic projections 217 are formed to be of the same shape mutually and to be of the same size mutually. Each elastic projection 217 contacts the side wall 123 of the recessed portion 120 of the case 2. Each elastic projection 217 is formed as a projecting rib extending in the up/down direction. The elastic projection 217 has a tapered shape in the direction of projection from the side surface 131. In plan view, the plurality of elastic projections 217 differ mutually in direction of projection.

As described above, the mounting structure 57 for informing device according to the present preferred embodiment is a mounting structure 57 for informing device that mounts the bottom surface 24 of the case 2 of the revolving light 1 to the top surface 56 of the roof 3 of the vehicle. The mounting structure 57 includes (a1) the cushioning members 58 interposed between the bottom surface 24 of the case 2 and the top surface 56 of the roof 3, (a2) the first fixing members 59 mounting the cushioning members 58 to the bottom surface 24 of the case 2, and (a3) the second fixing members 60 mounting the cushioning members 58 to the top surface 56 of the roof 34. Each cushioning member 58 includes (b1) the upper surface 132 opposing the bottom surface 24 of the case 2, (b2) the lower surface 133 opposing the top surface 56 of the roof 3, (b3) the first main cushioning portions 143 each made up of the elastic projection, disposed close to a first fixing member 59 and projecting from the upper surface 132, and contacting the bottom surface 24 of the case 2, (b4) the second main cushioning portion 148 made up of the elastic projection, disposed close to the second fixing member 60 and projecting from the lower surface 133, and contacting the top surface 56 of the mounting object member, and (b5) the sub cushioning portion that damps the vibration of the case 2. The sub cushioning portion includes (c1) the first sub cushioning portion 151, separated from the first main cushioning portions 143 and the first fixing members 59, having the elastic projections 201 and 202 projecting from the upper surface 132, and contacting the bottom surface 24 of the case 2, and (c2) the second sub cushioning portion, separated from the second main cushioning portion 148 and the second fixing member 60, having the elastic projections 203 to 216 projecting from the lower surface 133, and contacting the top surface 56 of the mounting object member.

With the present preferred embodiment, a high cushioning effect is obtained because the respective elastic projections of each cushioning member 58, that is, the first main cushioning portions 143, the second main cushioning portion 148, and the plurality of elastic projections 201 to 216 of the sub cushioning portion (also referred to hereinafter as elastic projections 143, 148, and 201 to 216) deform readily when a high-frequency vibration is received, even when the force is small. Meanwhile, when receiving a large force, each of the elastic projections 143, 148, and 201 to 216, for example, collapses and becomes less likely to deform.

Further, the elastic projections 201 to 216 of the sub cushioning portion are separated from the first and second main cushioning portions 143 and 148. Thus, when the first and second main cushioning portions 143 and 148 that are close to the first and second fixing members 59 and 60 are about to deform, the elastic projections 201 to 216 of the first and second sub cushioning portions 151 and 152 deform upon contacting the bottom surface 24 of the revolving light 1 and the top surface 56 of the roof 3. Consequently, deformation of the first and second main cushioning portions 143 and 148 is suppressed. Thus, when the vehicle vibrates, the vibration is dispersed among the first and second main cushioning portions 143 and 148 and the first and second sub cushioning portions 151 and 152, and resonance and high-frequency vibration of the revolving light 1 are thus suppressed.

Further, by deformation resistance of the respective elastic projections 143, 148, and 201 to 216 in the process of deformation, impacts and high-frequency vibration can be relaxed, and vibration of the informing device can also be damped.
The resonance of the revolving light 1 can be suppressed reliably while providing the high cushioning effect because both the first and second sub cushioning portions 151 and 152 are provided. It is also possible to provide just one of either of the first and second sub cushioning portions 151 and 152.

Also, with the present preferred embodiment, the revolving light 1 has the cylindrical case 2 that forms the bottom surface 24. Each cushioning member 58 extends elongatedly along the circumferential direction U2 of the case 2. The plurality of the cushioning members 58 are mutually separated in the circumferential direction U2 of the case 2. Each cushioning member 58 is mounted to the outer circumferential edge portion 121 of the bottom surface 24 of the case 2.
In this case, the plurality of cushioning members 58 are unlikely to influence each other in the process of deforming and can mutually suppress each other's deformation. Thus, when the vehicle vibrates, the resonance and high-frequency vibration of the revolving light 1 are suppressed further. Also, the revolving light 1 is made difficult to tilt because each cushioning member 58 is formed to be elongate in the circumferential direction U2 of the case 2 and is mounted to the outer circumferential edge portion 121 of the bottom surface 24 of the case 2. Deformation of the cushioning members 58 due to tilting of the revolving light 1 is consequently suppressed, and the resonance and high-frequency vibration of the revolving light 1 are suppressed further.

For example, when the three cushioning members 58 are separated in the circumferential direction U2 of the case 2, the revolving light 1 is supported with stability and moreover, difficulty of assembly can be made low.
Also, the sub cushioning portions 151 and 152 include the plurality of elastic projections 201 to 216 that differ in size. For example, when the elastic projections 201 to 216 differ in size, the elastic projections 201 to 216 differ in characteristic frequency. The characteristic frequency of each cushioning member 58 can thus be dispersed among a plurality of characteristic frequencies, and the resonance and high-frequency vibration of the revolving light 1 are thus suppressed.

Also with the present preferred embodiment, an elastic projection among the plurality of elastic projections 201 to 216 of different sizes that is relatively large is disposed closer to the straight line L1 joining the central position P2 of the second fixing member 60 and the central position P3 of the case 2 in plan view than an elastic projection that is relatively small. For example, in the plurality of elastic projections 211 to 215 of the third set, the elastic projection 213 that is relatively large is disposed closer to the straight line L1 than the elastic projections 212 and 214 that are relatively small. The elastic projections 212 and 214 that are relatively large are disposed closer to the straight line L1 than the elastic projections 211 and 215 that are relatively small.

In this case, the cushioning member 58 and the revolving light 1 are made difficult to tilt with respect to a direction of a normal to the top surface 56 of the roof 3. More specifically, the revolving light 1 is made difficult to tilt about a straight line L2 passing through the central position P2 of the second fixing member 60 and orthogonal to the straight line L1. Deformation of the cushioning member 58 due to tilting of the cushioning member 58 and the revolving light 1 is consequently suppressed, and the resonance and high-frequency vibration of the revolving light 1 are thus suppressed further.

Here, the sizes of the elastic projections 201 to 216 may be areas of contact with a counterpart member (for example, the case 2 or the roof 3) or may be sizes of planar shapes of base portions of the elastic projections 201 to 206.
Also, in the present preferred embodiment, the cushioning member 58 includes the first sub cushioning portion 151. The pair of first fixing members 59 that are aligned in a separated manner along the circumferential direction U2 of the case 2 are disposed in the cushioning member 58. The first sub cushioning portion 151 includes the plurality of elastic projections 201 and 202 of different sizes. The plurality of elastic projections 201 and 202 are disposed between the pair of first fixing members 59 in regard to the circumferential direction U2 of the case 2 and are disposed inward relative to the central position of either of the first fixing members in regard to radial directions R21 and R22 of the case 2.

In this case, the cushioning member 58 and the revolving light 1 are made difficult to tilt with respect to the direction of the normal to the top surface 56. For example, the revolving light 1 is made difficult to tilt about a straight line L3 joining the central positions P1 of the pairs of first fixing members 59. Deformation of the cushioning member 58 due to tilting of the cushioning member 58 and the revolving light 1 is consequently suppressed, and the resonance and high-frequency vibration of the revolving light 1 are thus suppressed further.
Also, with the present preferred embodiment, the cushioning member 58 includes the second sub cushioning portion 152, the second sub cushioning portion 152 includes the plurality of elastic projections 211 to 215 of different sizes, and the plurality of elastic projections 211 to 215 are disposed adjacent to the second fixing member 60 and inward relative to the second fixing member 60 in regard to the radial directions R21 and R22 of the case 2.

In this case, the cushioning member 58 and the revolving light 1 are made difficult to tilt with respect to the direction of the normal to the top surface 56. For example, the revolving light 1 is made difficult to tilt about the straight line L2 passing through the central position P2 of the second fixing member 60 and orthogonal to the straight line L1. Deformation of the cushioning member 58 due to tilting of the cushioning member 58 and the revolving light 1 is consequently suppressed, and the resonance and high-frequency vibration of the revolving light 1 are thus suppressed further.

Also, with the present preferred embodiment, the elastic projections 203 to 216 of the sub cushioning portion include the elastic projections 203 to 216 with tapered shapes.
In this case, the elastic projections 203 to 216 of the sub cushioning portion deform more readily nearer the tips of the elastic projections 203 to 216. The elastic projections 203 to 216 of the sub cushioning portion can deform even when a small impact force or a high-frequency vibration acts. Consequently, the cushioning effect can be obtained reliably. Meanwhile, as the deformation amounts of the elastic projections 203 to 216 increase, the deformation resistances of the elastic projections 203 to 216 increase rapidly. Large deformation of the cushioning member 58 is consequently suppressed, and the resonance and high-frequency vibration of the revolving light 1 are suppressed reliably.

Also, this effect is provided more reliably because each of the elastic projections 203 to 215 have a shape similar to a semispherical shape. The same effects can also be obtained when the shape of each elastic projection is, for example, any shape among a portion of a spherical shape, a portion of a conical shape, a portion of a pyramidal shape, or a shape approximating any of the above shapes.
Also, with the present preferred embodiment, the case 2 has the recessed portion 120 provided at the outer circumferential edge portion 121 of the bottom surface 24 of the case 2. A portion of the cushioning member 58 is disposed inside the recessed portion 120. The cushioning member 58 includes the side surface 131 opposing the side wall 123 of the recessed portion 120 and the plurality of elastic projections 217 projecting from the side surface 131. The elastic projections 217 contact the side wall 123 of the recessed portion 120.

In this case, a portion of the cushioning member 58 is disposed inside the recessed portion 120 of the case 2, and the revolving light 1 can thus be made low in height from the top surface 56 of the roof 3. A position of a center of gravity of the revolving light 1 can thereby be made low, and the resonance of the revolving light 1 can thus be suppressed further. Also, when the cushioning member 58 deforms, friction arises between the elastic projections 217 of the cushioning member 58 and the side wall 123 of the recessed portion 120 of the case 2, and relative movement of the cushioning member 58 and the case 2 is suppressed. The resonance and high-frequency vibration of the revolving light 1 can thus be suppressed further.

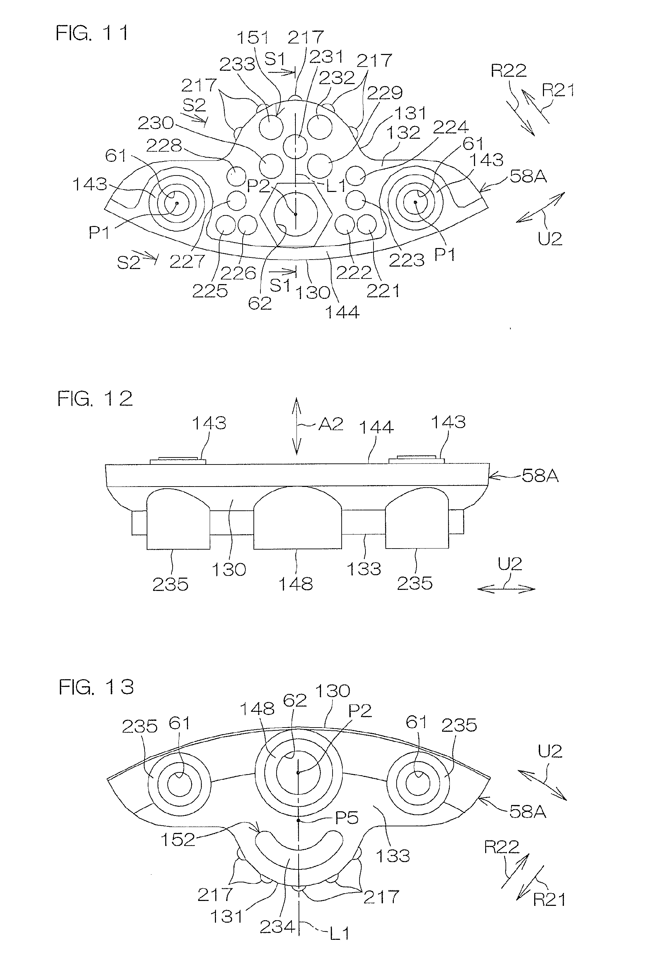

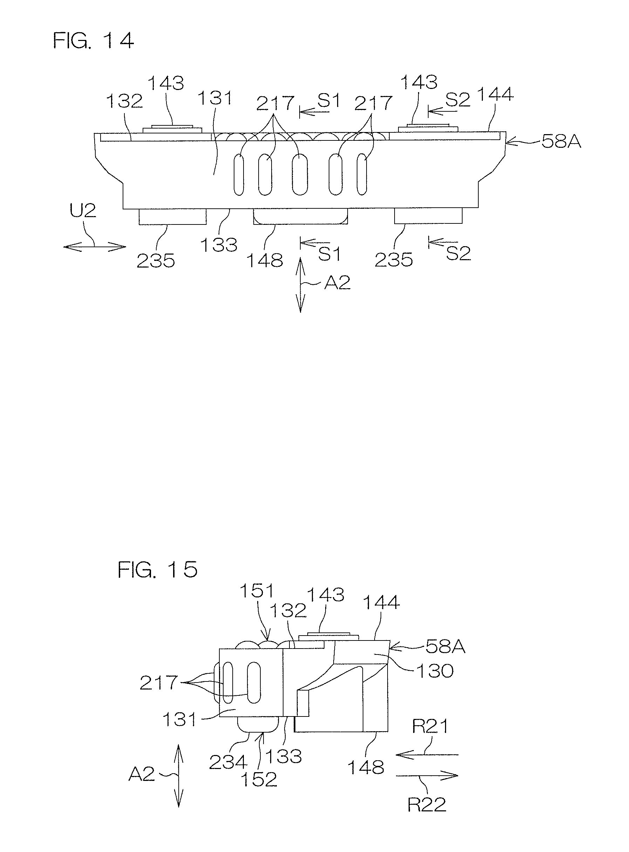

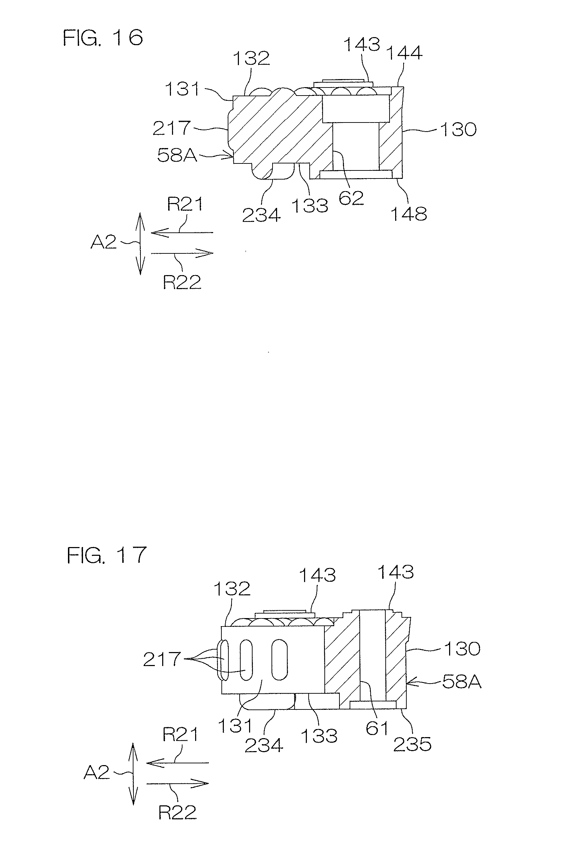

In regard to the present preferred embodiment, the following modification examples can be considered. In the description that follows, illustrations shall mainly be centered on points of difference with respect to the above-described preferred embodiment and these points shall mainly be described. Although, description shall be omitted in regard to arrangements of other portions, these other portions are the same in the above-described preferred embodiment and are provided with the same symbols.
For example, FIG. 11 is a top view of a cushioning member 58 of the mounting structure 57 of a second preferred embodiment, FIG. 12 is a front view of the cushioning member 58 shown in FIG. 11, and FIG. 13 is a bottom view of the cushioning member 58 shown in FIG. 11. FIG. 14 is a rear view of the cushioning member 58 shown in FIG. 11, FIG. 15 is a left side view of the cushioning member 58 shown in FIG. 11, FIG. 16 is a sectional view taken along line S1-S1 in FIG. 11 and FIG. 14, and FIG. 17 is a sectional view taken along line S2-S2 in FIG. 11 and FIG. 14.

Referring to FIG. 11 to FIG. 17, the cushioning member 58A is used in place of the cushioning member 58 described above. The cushioning member 58A differs from the cushioning member 58 in the following points and is the same in regard to other arrangements. The inclined surface 145 of the first main cushioning portion 143 is removed.
The first sub cushioning portion 151 of the cushioning member 58A has a plurality of elastic projections 221 to 233 projecting from the upper surface 132.

The respective elastic projections 221 and 233 are formed to be mutually of the same height in the direction of projection (amount of projection from the upper surface 132) in a free state (state of not being mounted to case 2). The elastic projections 221 to 233 are formed to be of the same height as the projecting rib 144. Each of the elastic projections 221 to 233 is formed to a tapered shape, for example, a paraboloid of revolution shape in the same manner as the elastic projection 202.

The plurality of elastic projections 221 to 224 form a first set. The first set of elastic projections 221 to 224 are disposed between one first fixing member 59 and the second fixing member 60 in regard to the circumferential direction U2 of the case 2. The plurality of elastic projections 221 to 224 are formed to be of the same size mutually.
The plurality of elastic projections 225 to 228 form a second set. The second set of plurality of elastic projections 225 to 228 are disposed between the other first fixing member 59 and the second fixing member 60 in regard to the circumferential direction U2 of the case 2. The plurality of elastic projections 225 to 228 are formed to be of the same size mutually.

The first set of plurality of elastic projections 221 to 224 and the second set of plurality of elastic projections 225 to 228 are formed to be in a line symmetrical relationship with the straight line L1 as an axis of symmetry in plan view.
The plurality of elastic projections 229, 230, 231, 232, and 233 form a third set. The third set of elastic projections 229 to 233 are disposed close to the second fixing member 60 and are disposed in the inward radial direction R21 of the case 2 relative to the second fixing member 60. The plurality of elastic projections 229 to 233 of the third set are formed to be in a line symmetrical relationship with the straight line L1 as an axis of symmetry in plan view. In plan view, the plurality of elastic projections 229 to 233 are formed to be of the same size mutually and are formed to be larger than the plurality of elastic projections 221 to 228.

The elastic projections 229 to 233 that are relatively large are disposed closer to the straight line L1 in plan view than the elastic projections 221 to 228 that are relatively small.
The second sub cushioning portion 152 of the cushioning member 58A includes a single elastic projection 234 and two elastic projections 235 projecting from the lower surface 133.
The elastic projection 234 is a projecting rib that is arcuate in plan view. In plan view, a center P5 of the arcuate shape of the elastic projection 234 is positioned along the straight line L1 and is in the inward radial direction R21 of the case 2 relative to the central position P2 of the second fixing member 60. Also, as with the elastic projection 201, the elastic projection 234 has a tapered shape.

Each elastic projection 235 has an annular shape formed along an edge portion of the first insertion hole 61 and is disposed closed to the first fixing member 59. Each elastic projection 235 does not have a tapered shape.
The elastic projections 234 and 235 are formed to be mutually of the same height in the direction of projection (amount of projection from the upper surface 132) as the second main cushioning portion 143 in a free state (state of not being mounted to roof 3).

In the present preferred embodiment, the number of the elastic projections 234 and 235 of the second sub cushioning portion 152 is a small number, for example, a number no more than five and more preferably no more than three, and the lower surface 133 can thus be improved in appearance.
Thefollowing modificationexamplescan also be considered in regard to the respective preferred embodiments described above. For example, it suffices that the number of the first fixing member 59 that fixes the single cushioning member 58 or 58A to the case 2 be at least one. It suffices that the number of the second fixing member 60 that fixes the single cushioning member 58 or 58A to the roof 3 be at least one. Also, though not illustrated, a case where the plurality of the cushioning members 58 or 58A are formed integrally, a case where two of the cushioning members are used, and a case where no less than four of the cushioning members are used may be considered.

Also, the shape of at least one elastic projection included in the first and second sub cushioning portions 151 and 152 of the first and second preferred embodiments may be made an arcuate shape or a shape combining an arcuate shape and a straight line instead of a parabolic shape in the cross section that contains the direction of projection of the elastic projection. Also, it suffices that at least one of either of the first and second sub cushioning portions 151 and 152 of the first and second preferred embodiments have at least one elastic projection.

As the light source of the revolving light 1, it suffices that at least one of either of the LEDs 8 and 9 be provided. Also, as the light source, a light bulb, etc., may be used in place of a light emitting diode. Various other changes may be applied within the scope of the matters described in the claims.

### DESCRIPTION OF THE SYMBOLS

1 --- revolving light (informing device)
2 --- case
3 --- roof (mounting object member)
24 --- bottom surface
56 --- top surface
57 --- mounting structure
58, 58A --- cushioning member
59 --- first fixing member
60 --- second fixing member
120 --- recessed portion at outer circumferential edge portion of bottom surface of case
121--- outer circumferential edge portion of bottom surface of case
123 --- side wall of recessed portion
131 --- side surface of cushioning member
132 --- upper surface
133 --- lower surface
143 --- first main cushioning portion
148 --- second main cushioning portion
151 --- first sub cushioning portion (sub cushioning portion)
152 --- second sub cushioning portion (sub cushioning portion)
201, 202, 221 to 233 --- elastic projections of first sub cushioning portion
203 to 216, 234, 235 --- elastic projections of second sub cushioning portion
217 --- elastic projection (projecting portion)
L1 --- straight line
P1 --- central position of first fixing member
P2 --- central position (of second fixing member)
P3 --- central position of case
R21 --- inward radial direction (radial direction) of case
R22 --- outward radial direction (radial direction) of case
U2 --- circumferential direction of case

## Claims

1. A mounting structure for mounting a bottom surface of an informing device to a top surface of a mounting object member, the structure comprising:
a cushioning member interposed between the bottom surface of the informing device and the top surface of the mounting object member; a first fixing member mounting the cushioning member to the bottom surface of the informing device; and a second fixing member mounting the cushioning member to the top surface of the mounting object member,
wherein the cushioning member comprises:
an upper surface opposing the bottom surface of the informing device; a lower surface opposing the top surface of the mounting object member; a first main cushioning portion disposed close to the first fixing member and contacting the bottom surface of the informing device; a second main cushioning portion disposed close to the second fixingmember and contacting the top surface of the mounting object member; and a sub cushioning portion, and
wherein the sub cushioning portion comprises at least one of a first sub cushioning portion and a second sub cushioning portion,
the first sub cushioning portion, being separated from the first main cushioning portion and the first fixing member, having at least one elastic projection projecting from the upper surface, and contacting the bottom surface of the informing device, and
the second sub cushioning portion, being separated from the second main cushioning portion and the second fixing member, having at least one elastic projection projecting from the lower surface, and contacting the top surface of the mounting object member.

2. The mounting structure according to Claim 1, wherein
the informing device has a cylindrical case forming the bottom surface,
there are a plurality of the cushioning members, and
the respective cushioning members are mutually separated in the circumferential direction of the case, each cushioning member being mounted to an outer circumferential edge portion of the bottom surface of the case.

3. The mounting structure according to Claim 1 or 2, wherein the sub cushioning portion comprises a plurality of elastic projections of different sizes.

4. The mounting structure according to Claim 3, wherein an elastic projection among the plurality of elastic projections of different sizes that is relatively large is disposed closer to a straight line joining a central position of the second fixing member and a central position of the case in plan view than an elastic projection that is relatively small.

5. The mounting structure according to Claim 3 or 4, wherein the cushioning member comprises the first sub cushioning portion, a pair of the first fixing members that are aligned in a mutually separated manner along the circumferential direction of the case are disposed at the cushioning member,
the first sub cushioning portion comprises the plurality of elastic projections of different sizes, and the plurality of elastic projections are disposed between the pair of first fixing members in regard to the circumferential direction of the case and are disposed inward relative to a central position of either of the first fixing members in regard to a radial direction of the case.

6. The mounting structure according to any one of Claims 3 to 5, wherein the cushioning member comprises the second sub cushioning portion,
the second sub cushioning portion comprises the plurality of elastic projections of different sizes, and the plurality of elastic proj ections are disposed adj acent to the second fixing member and inward relative to the second fixing member in regard to the radial direction of the case.

7. The mounting structure according to any one of Claims 1 to 6, wherein the elastic projection of the sub cushioning portion includes an elastic projection with a tapered shape.

8. The mounting structure according to any one of Claims 1 to 7, wherein the case has a recessed portion disposed at the outer circumferential edge portion of the bottom surface of the case, a portion of the cushioning member is disposed inside the recessed portion,
the cushioning member comprises: a side surface opposing a side wall of the recessed portion; and a projecting portion projecting from the side surface; and the projecting portion contacts the side wall of the recessed portion.

9. The mounting structure according to any one of Claims 1 to 8, wherein the informing device includes a revolving light.
